# EUROPÄISCHE PATENTSCHRIFT

(11) **EP 1 391 566 B1**
(45) Veröffentlichungstag und Bekanntmachung des Hinweises auf die Patenterteilung: **16.07.2008**
(21) Anmeldenummer: 03018607.6
(22) Anmeldetag: 19.08.2003
(51) Int. Cl.: E04B 1/66, E04B 1/68, E02D 31/02, F16L 5/02

(54) **Verfahren zum Herstellen einer Abdichtung**
Method for producing a sealing
Méthode pour produire un joint d'étanchéité

(30) Priorität: 23.08.2002 DE 10239535
(43) Veröffentlichungstag der Anmeldung: 25.02.2004
(73) Patentinhaber: Kostic, Zoran, 61231 Bad Nauheim (DE)
(72) Erfinder: Kostic, Zoran, 61231 Bad Nauheim (DE)
(74) Vertreter: Knefel, Cordula

(56) Entgegenhaltungen:
- EP-A- 0 344 868
- US-A- 2 233 872
- US-A- 2 277 286
- US-A- 4 209 568

## Beschreibung

Die Erfindung betrifft ein Verfahren zum Herstellen einer Abdichtung, insbesondere für Teile eines Bauwerkes.

Zum Stand der Technik gehören Abdichtungsverfahren, bei denen eine Schicht aus einem zwei- oder mehrkomponentigen Material, beispielsweise auf Polyurethanbasis oder Polyacrylatbasis auf dem Mauerwerk aufgetragen wird. Dieses Material härtet auf dem Mauerwerk aus. Das zum Stand der Technik gehörende Verfahren hat den Nachteil, dass das ausgehärtete Material, wenn erneute Setzrisse oder dergleichen bei der Mauer auftreten, reißt und die Mauer wieder wasserdurchlässig wird.

Darüber hinaus muss bei den zum Stand der Technik gehörenden Verfahren in Abständen eine Vielzahl Bohrungen eingebracht werden, um das zwei- oder mehrkomponentige Material auf dem Mauerwerk aufzubringen.

Weiterhin gehört zum Stand der Technik (DE 37 17 885 C3) ein Verfahren und eine Vorrichtung zum Herstellen einer Dichtungsschicht aus mineralischen Dichtungsmaterialien. Das Material, insbesondere Bentonit wird gemäß diesem zum Stand der Technik gehörenden Verfahren trocken eingebracht. Anschließend wird Flüssigkeit zugeführt, entweder in Form von ohnehin vorhandenem Grundwasser oder als gesondert zugeführtes Wasser.

Dieses zum Stand der Technik gehörende Verfahren hat den Nachteil, dass, wenn das Wasser auf das trockene Bentonit trifft, sich das Bentonit sehr stark ausdehnt. Es tritt hierbei eine sehr große Spannung auf. Diese Spannung bewirkt, dass das Bentonit nur sehr wenig Wasser aufnehmen kann. Hierdurch wird keine Abdichtwirkung erzielt, sondern das Wasser kann weiterhin durch das Mauerwerk eindringen.

Zum Stand der Technik (US-A 2,233,872) gehört darüber hinaus ein Verfahren, bei dem ein Gemisch aus Zement und Bentonit in Leckstellen eingebracht wird. Dieses zum Stand der Technik gehörende Verfahren hat den Nachteil, dass der Zement aushärtet. Hierdurch kann er sein Volumen nicht verändern, so dass nach dem Aushärten des Zementes eine Dichtigkeit nicht sicher gewährleistet ist.

Das der Erfindung zugrunde liegende technische Problem besteht darin, ein Verfahren zum Abdichten von Mauerwerk und/oder Rohrdurchführungen anzugeben, welches eine zuverlässige Abdichtung gewährleistet.

Dieses technische Problem wird durch ein Verfahren mit den Merkmalen gemäß dem Anspruch 1 gelöst.

Dadurch, dass der quellfähige Ton, insbesondere Bentonit in gelförmiger Form unter Druck in den abzudichtenden Hohlraum eingebracht wird, verteilt sich der quellfähige, gelförmige Ton zuverlässig in dem gesamten Zwischenraum.

Vorzugsweise wird gemäß der Erfindung Bentonit verwendet, welches vorteilhaft lediglich eine Wassersättigung zwischen 30 % und 70 % aufweist, so dass das Bentonit nach dem Einbringen in den Zwischenraum zusätzlich noch Wasser aufnehmen kann. Ist die Umgebung trocken, kann das Bentonit auch Wasser abgeben.

Im Folgenden werden die Vorteile des erfindungsgemäßen Verfahrens anhand des Bentonits aufgezeigt. Die Vorteile gelten jedoch für die Verwendung jedes quellfähigen Tones.

Das Bentonit-Gel wird gemäß der Erfindung unter Druck eingebracht. Diesen Druck behält das Bentonit-Gel nach dem Einbringen jedoch nicht bei, so dass es noch zusätzliches Wasser aufnehmen kann. Durch die Wasseraufnahme tritt eine Volumenvergrößerung auf, die jedoch nicht so groß ist wie bei trockenem Bentonit. Durch die Volumenvergrößerung presst sich das Bentonit an oder in die abzudichtenden Stellen, wodurch eine Abdichtung erzielt wird. Die erfindungsgemäße Bentonit-Abdichtung wirkt also auf zwei Wegen. Bis zu einem gewissen Grad nimmt das Bentonit Wasser auf, wodurch das Volumen vergrößert wird. Kann das Bentonit kein Wasser mehr aufnehmen, ist das Volumen derart vergrößert, dass das Bentonit-Gel sich an die abzudichtende Stelle anpresst und dadurch kein Wasser mehr durchlässt. Die optimale Abdichtung wird insbesondere durch das Einbringen des Bentonits in feuchter Form und mit Druck erzielt.

Der Vorteil des erfindungsgemäßen Verfahrens besteht darin, dass das Bentonit-Gel unter Druck eingebracht wird, dass es jedoch nicht mit Wasser gesättigt ist, so dass es noch zusätzlich Wasser aufnehmen kann.

Vorteilhaft wird das Bentonit unter Ausbildung und Ausnutzung wenigstens eines Injektionskanals vor, an oder in der abzudichtenden Stelle des Bauwerkes angeordnet. Der Vorteil des erfindungsgemäßen Verfahrens liegt darin, dass keine zusätzlichen Arbeiten nötig sind, um beispielsweise den Raum für das Bentonit zu schaffen. Beispielsweise wird das Bentonit zwischen Erdreich und Mauerwerk oder Bodenplatte eines Bauwerkes eingebracht, indem in dem Mauerwerk oder der Bodenplatte wenigstens ein Injektionskanal ausgebildet wird. Auch bei der Abdichtung von Dilatationsfugen wird wenigstens ein Injektionskanal in die Fuge geführt. Durch den wenigstens einen Injektionskanal wird das gelförmige Bentonit, welches nicht mit Wasser gesättigt ist, in die Dilatationsfuge eingebracht.

Das erfindungsgemäße Verfahren hat den Vorteil, dass vorhandene Räume oder Hohlräume für die Aufnahme des Bentonit-Gels verwendet werden, ohne dass diese Räume gesondert geschaffen, beispielsweise freigegraben, werden müssen.

Das Bentonit wird vorteilhaft mit einem Druck von zwei bis 200 bar in den Zwischenraum eingebracht. Es sind jedoch auch höhere Drücke möglich.

Bei der Abdichtung von Mauerwerk wird das Bentonit in den Zwischenraum zwischen dem Mauerwerk und der Erde eingepresst.

Bei der Abdichtung einer Rohrdurchführung wird das Bentonit in einen Hohlraum eingebracht. Üblicherweise wird das Rohr in einen Beton eingegossen. Vorteilhaft verbleibt in dem Beton um das Rohr herum ein Hohlraum, der mit einer Abdeckung verschlossen wird. In diesem Hohlraum wird das Bentonit angeordnet. Die Abdeckplatte weist vorteilhaft eine Öffnung auf, durch die das Rohr geführt ist.

Bei der Anordnung von Bentonit zur Abdichtung eines Mauerwerkes ist es ausreichend, das Bentonit-Gel in einer Schichtdicke von wenigstens 0,5 Zentimetern anzuordnen. Als vorteilhaft hat sich eine Schichtdicke von wenigstens einem Zentimeter erwiesen.

Bei der Verwendung des Bentonit-Gels hat sich als besonders vorteilhaft ein Gemisch herausgestellt, welches einen Volumenteil Bentonit und ein bis zehn Volumenteile Wasser aufweist. Gemäß einer besonders bevorzugten Ausführungsform wird ein Volumenteil Bentonit und 7,5 Volumenteile Wasser verwendet.

Als Bentonit wird vorteilhaft ein Bentonit vom Typ "Volclay MC80" (Handelsname) der Südchemie AG (Firmenname) verwendet.

Das Bentonit-Gel wird vorteilhaft mittels eines Injektionsverfahrens eingebracht.

Das erfindungsgemäße Verfahren hat den Vorteil, dass man häufig mit einer Bohrung zum Einbringen des Bentonit-Gels auskommt. Sind mehrere Bohrungen erforderlich bei einer großflächigen Abdichtung, so kommt man mit dem erfindungsgemäßen Verfahren dennoch mit sehr wenigen Bohrungen aus.

Das Bentonit-Gel wird ausschließlich unter Ausbildung und Ausnutzung wenigstens eines Injektionskanals unter Druck in, an oder vor einem abzudichtenden Teil eines Bauwerkes angeordnet.

Gemäß der Erfindung weist das Bentonit eine Sättigung mit Wasser, vorteilhaft zwischen 30 % und 70 % auf. Der quellfähige Ton hat den Vorteil, dass er prinzipiell noch Wasser aufnehmen kann. Die Wasseraufnahme ist jedoch nicht die Hauptaufgabe des Bentonits, sondern die Abdichtung erfolgt dadurch, dass sich das Bentonit bis zu 30 % ausdehnt, wenn es mit zusätzlichem Wasser in Verbindung kommt. Durch diese Ausdehnung wird die Abdichtung erreicht.

Auch bei der Abdichtung von Rohrdurchführungen, beispielsweise durch Betonwände in Klärbecken, ist das erfindungsgemäße Verfahren sehr vorteilhaft. Das Rohr wird beispielsweise in einem Durchbruch, zum Beispiel bei einer Renovierung eingesetzt und verfüllt. Im vorderen Bereich wird der Hohlraum mit einer Abdeckplatte verschlossen. Das Bentonit wird in den Hohlraum mit Druck eingebracht. Durch die Ausdehnung des Bentonits, wenn es mit Wasser in Verbindung kommt, tritt wiederum eine Volumenvergrößerung des Bentonits auf, wodurch die Abdichtwirkung erzielt wird.

In der Zeichnung ist ein Ausführungsbeispiel der Erfindung dargestellt, und zwar zeigen:
- Fig. 1: eine Abdichtung eines Bauwerkes an verschiedenen Stellen im Schnitt;
- Fig. 2: ein weiteres Ausführungsbeispiel für eine Abdichtung im Schnitt;
- Fig. 3: eine Rohrabdichtung im Längsschnitt;
- Fig. 4: eine Ansicht in Richtung des Pfeiles IV der Fig. 3;
- Fig. 5: einen Querschnitt durch eine mehrteilige Bodenplatte mit Dilatationsfuge;
- Fig. 6: ein geändertes Ausführungsbeispiel.

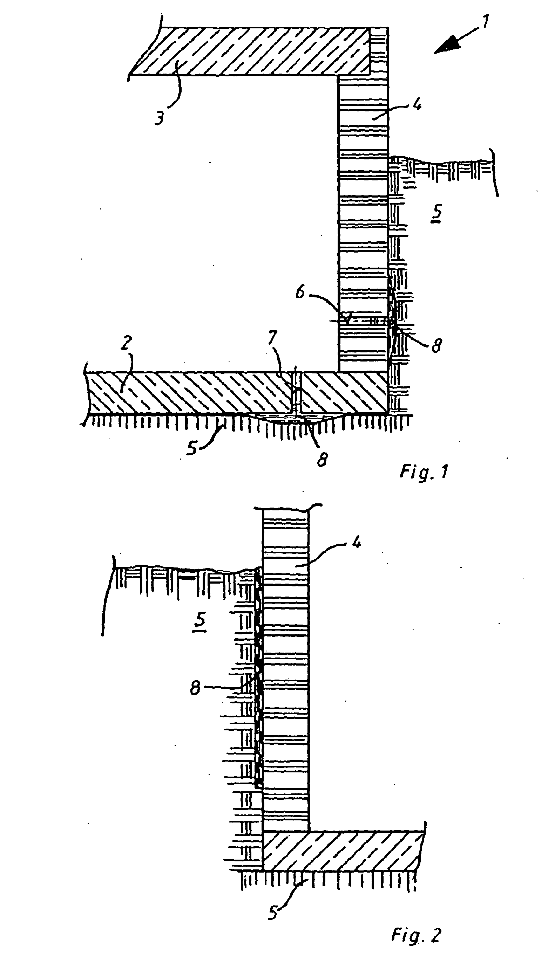

Fig. 1 zeigt ein Gebäude (1) mit einer Bodenplatte (2), einer Decke (3) und einer Wand (4). Die Bodenplatte (2) und ein Teil der Wand (4) sind im Erdreich (5) angeordnet. Zur Abdichtung von Leckstellen in der Bodenplatte (2) und in der Wand (4) sind in der Bodenplatte (2) und in der Wand (4) Bohrungen (6, 7) angeordnet, durch die Bentonit-Gel (8) mit Druck eingebracht wird. Das Bentonit-Gel weist einen Volumenteil Bentonit und 7,5 Volumenteile Wasser auf, so dass das Bentonit nicht gesättigt ist. Das Bentonit-Gel wird mit einem Druck von 50 bar durch die Bohrungen (6, 7) eingebracht und füllt Zwischenräume zwischen dem Erdreich (5) und der Bodenplatte (2) beziehungsweise der Wand (4) aus. Trifft weiteres Wasser, welches aus dem Erdreich stammt, auf das Bentonit, so dehnt sich das Bentonit bis zu 30 % aus, wodurch eine Abdichtung erzielt wird, so dass kein Wasser mehr aus dem Erdreich (5) durch die Wand (4) oder die Bodenplatte (2) dringt.

Gemäß Fig. 2 ist zwischen der Wand (4) und dem Erdreich (5) eine Schicht (8) eines Bentonit-Gels eingebracht, so dass auch hier eine Abdichtung zwischen dem Erdreich (5) und der Wand (4) erfolgt.

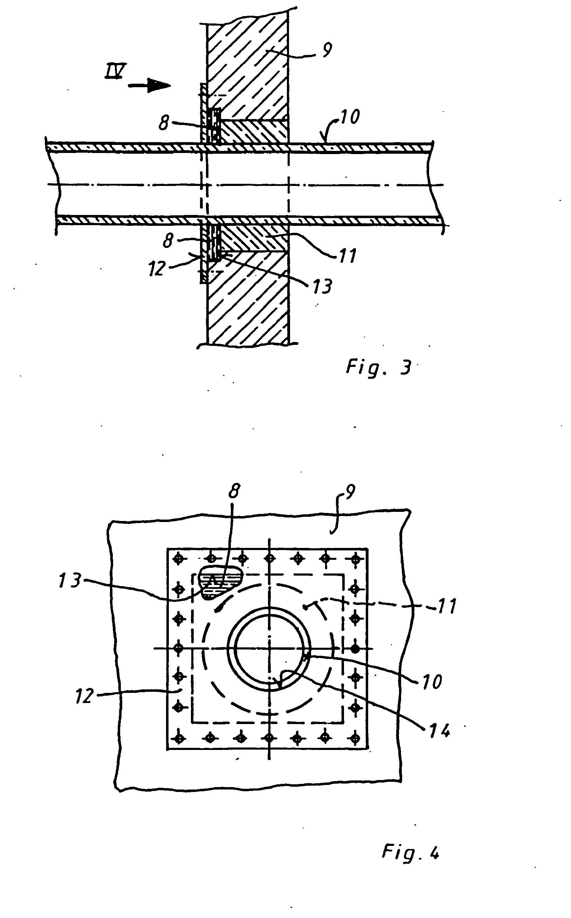

Fig. 3 zeigt eine Wand (9) eines Klärbeckens, durch die ein Rohr (10) geführt ist. Das Rohr (10) sitzt in einer Betonschicht (11) in der Wand (9). Zwischen der Wand (9), der Betonschicht (11), dem Rohr (10) und einer Abdeckplatte (12) ist ein Hohlraum (13) vorhanden, der mit dem Bentonit-Gel (8) unter Druck gefüllt wird. Der Druck ist so gewählt, dass sich das nicht mit Wasser gesättigte Bentonit-Gel bei Auftreffen weiteren Wassers ausdehnen und damit das Rohr (10) in der Wand (9) abdichten kann.

Gemäß Fig. 4 ist in der Abdeckplatte (12) eine Ausnehmung (14) für das Rohr (10) vorgesehen. Die Abdeckplatte (12) ist an der Betonwand (9) befestigt.

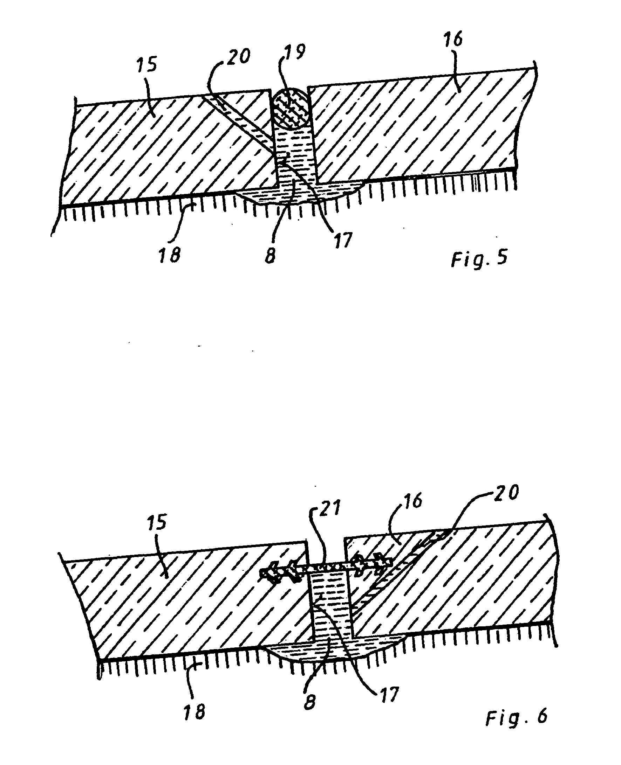

Fig. 5 zeigt eine zweiteilige Bodenplatte (15, 16). Zwischen den Teilen (15, 16) ist eine Dilatationsfuge (17) angeordnet. Die Bodenplatte (15, 16) liegt auf Erdreich (18) auf. Um einen abgeschlossenen Hohlraum für das in die Dilatationsfuge (17) einzubringende Bentonit zu erhalten, wird vor Einbringen des Bentonit-Gels eine Dichtung (19) zwischen den Teilen (15, 16) angeordnet. Mittels eines Injektionskanals (20) wird das gelförmige Bentonit in die Dilatationsfuge (17) unter Druck eingebracht. Das Bentonit dehnt sich in das Erdreich (18) aus.

Gemäß Fig. 6 sind die Teile (15, 16) der Bodenplatte mittels einer Gummidichtung (21) miteinander verbunden. Die Gummidichtung wird gemäß dem Stand der Technik verwendet, um die Bodenplatte abzudichten. Dennoch kommt es häufig genug vor, dass das Wasser aus dem Erdreich um die Gummidichtung (21) herum diffundiert und aus den Dilatationsfugen (17) austritt. Auch in diesem Fall wird über einen Injektionskanal (20) gelförmiges, nicht mit Wasser gesättigtes Bentonit in die Dilatationsfuge (17) eingebracht. Durch die Gummidichtung (21) wird der Hohlraum gebildet, in den das Bentonit-Gel eingebracht wird.

Sofern in dem Hohlraum vor Einbringen des Betonits Wasser vorhanden ist, ist es vorteilhaft, zusätzliche Entwässerungskanäle (nicht dargestellt), vorzusehen, aus denen das Wasser während des Einbringens des Bentonit-Gels austreten kann. Sobald das Wasser ausgetreten ist, werden die Entwässerungskanäle verschlossen.

### Bezugszahlen

- 1: Gebäude
- 2: Bodenplatte
- 3: Decke
- 4: Wand
- 5: Erdreich
- 6, 7: Bohrungen
- 8: Bentonit-Gel
- 9: Wand
- 10: Rohr
- 11: Betonschicht
- 12: Abdeckplatte
- 13: Hohlraum
- 14: Ausnehmung
- 15: Teil einer Bodenplatte
- 16: Teil einer Bodenplatte
- 17: Dilatationsfuge
- 18: Erdreich
- 19: Dichtung
- 20: Injektionskanal
- 21: Gummidichtung

## Patentansprüche

1. Verfahren zum Herstellen einer Dichtungsschicht mit quellfähigem Ton, bei dem der quellfähige Ton unter Druck in, an oder vor einem abzudichtenden Teil eines Bauwerkes angeordnet wird,
**dadurch gekennzeichnet , dass** lediglich quellfähiger Ton, welcher gelförmig ist, unter Druck in, an oder vor einem abzudichtenden Teil des Bauwerkes (2, 3, 4, 13, 15, 16) angeordnet wird.

2. Verfahren nach Anspruch 1, **dadurch gekennzeichnet, dass** als quellfähiger Ton Bentonit (8) verwendet wird.

3. Verfahren nach Anspruch 1, **dadurch gekennzeichnet, dass** der gelförmige, quellfähige Ton (8) durch einen Druck von zwei bis 200 bar in, an oder vor dem abzudichtenden Teil des Bauwerkes (2, 3, 4, 13, 15, 16) angeordnet wird.

4. Verfahren nach Anspruch 1, **dadurch gekennzeichnet, dass** der gelförmige, quellfähige Ton (8) in einen Zwischenraum zwischen dem Teil des Bauwerkes (2, 3, 4) und Erde (5) eingepresst wird.

5. Verfahren nach Anspruch 1, **dadurch gekennzeichnet, dass** der gelförmige, quellfähige Ton (8) in wenigstens eine Dilatationsfuge (17) eines Bauwerkes (15, 16) eingepresst wird.

6. Verfahren nach Anspruch 1, **dadurch gekennzeichnet, dass** der gelförmige, quellfähige Ton (8) in einen abgeschlossenen, ein Rohr (10) umgebenden Hohlraum (13) eingepresst wird.

7. Verfahren nach Anspruch 5, **dadurch gekennzeichnet, dass** der Hohlraum (13) aus einer Wand (9), durch die das Rohr (10) geführt ist, und aus wenigstens einer Abdeckung (12) gebildet wird.

8. Verfahren nach Anspruch 6, **dadurch gekennzeichnet, dass** die Abdeckplatte als Abdeckplatte (12) mit einer das Rohr (10) aufnehmenden Öffnung ausgebildet ist.

9. Verfahren nach Anspruch 1, **dadurch gekennzeichnet, dass** der gelförmige, quellfähige Ton (8) in einer Schichtdicke von wenigstens 0,5 Zentimetern angeordnet wird.

10. Verfahren nach Anspruch 1, **dadurch gekennzeichnet, dass** ein Bentonit-Gel (8) verwendet wird, welches einen Volumenteil Bentonit und ein bis zehn Volumenteile Wasser aufweist.

11. Verfahren nach Anspruch 9, **dadurch gekennzeichnet, dass** das Bentonit-Gel (8) einen Volumenteil Bentonit und 7,5 Volumenteile Wasser aufweist.

12. Verfahren nach Anspruch 1, **dadurch gekennzeichnet, dass** als Betonit ein Betonit vom Typ "Volclay, MC80" (Handelsname) der Firma Südchemie AG (Firmenname) verwendet wird.

13. Verfahren nach Anspruch 1, **dadurch gekennzeichnet, dass** der gelförmige, quellfähige Ton (8) mittels eines Injektionsverfahrens eingebracht wird.

14. Verfahren nach Anspruch 1, **dadurch gekennzeichnet, dass** der gelförmige, quellfähige Ton (8) ausschließlich unter Ausbildung und Ausnutzung wenigstens eines Injektionskanals (20) in, an oder vor einem abzudichtenden Teil eines Bauwerkes (2, 3, 4, 13, 15, 16) angeordnet wird.

## Claims

1. A method of producing a sealing layer with swellable clay, in which the swellable clay is placed under pressure in, on or in front of a part of a building structure to be sealed, **characterized in that** only swellable clay which is in the form of a gel is placed under pressure in, on or in front of a part of the building structure (2, 3, 4, 13, 15, 16) to be sealed.

2. A method according to Claim 1, **characterized in that** bentonite (8) is used as the swellable clay.

3. A method according to Claim 1, **characterized in that** the swellable clay (8) in the form of a gel is placed by a pressure of from 2 to 200 bar in, on or in front of the part of the building structure (2, 3, 4, 13, 15, 16) to be sealed.

4. A method according to Claim 1, **characterized in that** the swellable clay (8) in the form of a gel is pressed into an interspace between the part of the building structure (2, 3, 4) and the earth (5).

5. A method according to Claim 1, **characterized in that** the swellable clay (8) in the form of a gel is pressed into at least one dilatation joint (17) of a building structure (15, 16).

6. A method according to Claim 1, **characterized in that** the swellable clay (8) in the form of a gel is pressed into a closed-off cavity (13) surrounding a pipe (10).

7. A method according to Claim 5, **characterized in that** the cavity (13) is formed from a wall (9), through which the pipe (10) is passed, and from at least one cover (12).

8. A method according to Claim 6, **characterized in that** the cover plate is constructed in the form of a cover plate (12) with an opening receiving the pipe (10).

9. A method according to Claim 1, **characterized in that** the swellable clay (8) in the form of a gel is placed in a layer thickness of at least 0·5 cm.

10. A method according to Claim 1, **characterized in that** a bentonite gel (8) is used, which has one part by volume of bentonite and from one to ten parts by volume of water.

11. A method according to Claim 9, **characterized in that** the bentonite gel (8) has one part by volume of bentonite and 7,5 parts by volume of water.

12. A method according to Claim 1, **characterized in that** a bentonite of the type "Volclay, MC80" (trade name) of the firm Südchemie AG (company name) is used as the bentonite.

13. A method according to Claim 1, **characterized in that** the swellable clay (8) in the form of a gel is introduced by means of an injection method.

14. A method according to Claim 1, **characterized in that** the swellable clay (8) in the form of a gel is placed with the exclusive formation and use of at least one injection channel (20) in, on or in front of a part of the building structure (2, 3, 4, 13, 15, 16) to be sealed.

## Revendications

1. Procédé de fabrication d'une couche d'étanchéité à base d'argile susceptible de gonfler, dans lequel l'argile, susceptible de gonfler sous l'exercice d'une pression, est appliquée sur, à ou devant une partie dont on veut assurer l'étanchéité d'un bâtiment, ce procédé étant **caractérisé en ce que** l'argile susceptible de gonfler, qui est sous forme de gel est appliquée seulement sur, à ou devant une partie dont on veut assurer l'étanchéité d'un bâtiment (2, 3, 4, 13, 15, 16).

2. Procédé selon la revendication 1, **caractérisée en ce que** l'on emploie comme argile susceptible de gonfler de la bentonite (8).

3. Procédé selon la revendication 1, **caractérisée en ce que** l'argile susceptible de gonfler (8), qui est sous forme de gel, est appliquée sous une pression comprise entre 2 bars et 200 bars sur, à ou devant une partie dont on veut assurer l'étanchéité d'un bâtiment (2, 3, 4, 13, 15, 16).

4. Procédé selon la revendication 1, **caractérisée en ce que en ce que** l'argile susceptible de gonfler (8), qui est sous forme de gel, est appliquée sous pression dans une zone intermédiaire formée entre la partie d'un bâtiment (2, 3, 4) et le terrain (5).

5. Procédé selon la revendication 1, **caractérisée en ce** l'argile susceptible de gonfler (8), qui est sous forme de gel, est appliquée au moins dans un joint de dilatation (17) d'un bâtiment (15, 16)

6. Procédé selon la revendication 1, **caractérisée en ce que** l'argile susceptible de gonfler (8), qui est sous forme de gel, est appliquée sous pression dans une zone vide, close (13), entourant un conduit (10).

7. Procédé selon la revendication 5, **caractérisée en ce que** le vide (13) est formé entre un mur, à travers lequel le conduit (10) passe, et au moins élément de couverture (12).

8. Procédé selon la revendication 6, **caractérisée en ce que** la plaque de couverture consiste en une plaque de couverture (12) comprenant une ouverture dans laquelle passe le conduit (10).

9. Procédé selon la revendication 1, **caractérisée en ce que** l'argile susceptible de gonfler (8), qui est sous forme de gel, est appliquée sur une épaisseur d'au moins 0,5 cm.

10. Procédé selon la revendication 1, **caractérisée en ce que** est employé un gel de bentonite (8) contenant une partie en volume de bentonite et une de 1 à 10 parties d'eau.

11. Procédé selon la revendication 9, **caractérisée en ce que** le gel de bentonite (8) contient une partie en volume de bentonite et 7,5 parties en volume d'eau.

12. Procédé selon la revendication 1, **caractérisée en ce que** en tant que bentonite est employée une bentonite de type Volclay, MC80^{®} de la Société Südchimie AG.

13. Procédé selon la revendication 1, **caractérisée en ce que** l'argile susceptible de gonfler (8), qui est sous forme de gel, est appliquée par un procédé opérant par injection.

14. Procédé selon la revendication 1, **caractérisée en ce que** l'argile susceptible de gonfler (8), qui est sous forme de gel, est appliquée exclusivement par réalisation et utilisation d'au moins un canal d'injection (20) sur, à ou devant une partie dont on veut assurer l'étanchéité d'un bâtiment (2, 3, 4, 13, 15, 16).
